(19) Europäisches Patentamt European Patent Office Office européen des brevets

(11) **EP 3 601 759 B1**

(12) **EUROPEAN PATENT SPECIFICATION**

(45) Date of publication and mention
of the grant of the patent:
**04.05.2022 Bulletin 2022/18**

(51) International Patent Classification (IPC):
**F01N 9/00** (2006.01)      **F01N 3/20** (2006.01)
**F01N 3/28** (2006.01)

(21) Application number: **18777216.5**

(22) Date of filing: **23.03.2018**

(52) Cooperative Patent Classification (CPC):
**F01N 9/00; F01N 3/206; F01N 3/208; F01N 9/005;**
F01N 2560/06; F01N 2560/07; F01N 2610/02;
F01N 2900/08; F01N 2900/1404; F01N 2900/1821;
Y02T 10/12; Y02T 10/40

(86) International application number:
**PCT/SE2018/050306**

(87) International publication number:
**WO 2018/182486 (04.10.2018 Gazette 2018/40)**

(54) **METHOD AND SYSTEM FOR CONTROL OF AT LEAST ONE OF A DOSAGE DEVICE AND/OR AN ENGINE**

VERFAHREN UND SYSTEM ZUR STEUERUNG MINDESTENS EINER DOSIERVORRICHTUNG UND/ODER EINES MOTORS

PROCÉDÉ ET SYSTÈME DE COMMANDE D'UN DISPOSITIF DE DOSAGE ET/OU D'UN MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2017 SE 1750393**

(43) Date of publication of application:
**05.02.2020 Bulletin 2020/06**

(73) Proprietor: **Scania CV AB
151 87 Södertälje (SE)**

(72) Inventors:
• **BIRGERSSON, Henrik
117 65 Stockholm (SE)**
• **ORRLING, Stefan
115 24 Stockholm (SE)**

• **TEMPELMANN, David
126 54 Hägersten (SE)**

(74) Representative: **Scania CV AB
Patents, GP 117kv
151 87 Södertälje (SE)**

(56) References cited:
**EP-A1- 2 966 276          DE-A1-102005 031 720
JP-A- 2013 122 218       US-A1- 2009 107 119
US-A1- 2009 297 417    US-A1- 2011 146 240
US-A1- 2014 000 247**

• **ZHANG, J. et al.: "Asian Journal of Chemistry",
Investigation of deposits in Urea-SCR
after-treatment systems for heavy-duty diesel
Engines, vol. 25, no. 6, 2013, pages 3121-3126,
XP055546686,**

## Description

## Technical field

The present invention relates to a method for controlling at least one of a dosage device and an engine, according to the preamble of claim 1. The present invention also relates to a system arranged for controlling at least one of a dosage device and an engine, according to the preamble of claim 14.

The invention also relates to a computer program and a computer-readable medium, which implement the method according to the invention.

## Background

The following background description constitutes a description of the background to the present invention, and thus need not necessarily constitute prior art.

In connection with increased government interests concerning pollution and air quality, primarily in urban areas, emission standards and regulations regarding emissions from combustion engines have been drafted in many jurisdictions.

Such emission standards often comprise requirements defining acceptable limits of exhaust emissions from combustion engines in for example vehicles. For example, emission levels of nitrogen oxides $NO_x$, hydrocarbons $C_xH_y$, carbon monoxide CO and particles PM are often regulated by such standards for most types of vehicles. Vehicles equipped with combustion engines typically give rise to such emissions in varying degrees. In this document, the invention will be described mainly for its application in vehicles. However, the invention may be used in substantially all applications where combustion engines are used, for example in vessels such as ships or aeroplanes/helicopters, wherein regulations and standards for such applications limit emissions from the combustion engines.

In an effort to comply with these emission standards, the exhausts caused by the combustion of the combustion engine are treated (purified).

A common way of treating exhausts from a combustion engine includes a so-called catalytic purification process, which is why vehicles equipped with a combustion engine usually comprise at least one catalyst. There are different types of catalysts, where the different respective types may be suitable depending on for example the combustion concept, combustion strategies and/or fuel types which are used in the vehicles, and/or the types of compounds in the exhaust stream to be purified. In relation to at least nitrous gases (nitrogen monoxide, nitrogen dioxide), referred to below as nitrogen oxides $NO_x$, vehicles often comprise a catalyst, wherein an additive is supplied to the exhaust stream resulting from the combustion in the combustion engine, in order to reduce nitrogen oxides $NO_x$, primarily to nitrogen gas and aqueous vapour.

Selective Catalytic Reduction (SCR) catalysts are for example a commonly used type of catalyst for this type of reduction, primarily for heavy goods vehicles. SCR catalysts usually use ammonia $NH_3$, or a composition from which ammonia may be generated/formed, such as e.g. AdBlue, as an additive to reduce the amount of nitrogen oxides $NO_x$ in the exhausts. The additive is injected into the exhaust stream resulting from the combustion engine upstream of the catalyst. The additive added to the catalyst is adsorbed (stored) in the catalyst, in the form of ammonia $NH_3$, so that a redox-reaction may occur between nitrogen oxides $NO_x$ in the exhausts and ammonia $NH_3$ available via the additive.

An example of a method of detecting deposits of urea in an exhaust passage is shown in JP 2013122218 A1.

## Brief description of the invention

The additive being injected into the exhaust stream is thus very important for the reduction of the nitrogen oxides $NO_x$ in the exhausts. However, in known solutions, the control of the amount to be injected is not very exact/reliable, which may be problematic. Especially, if too much additive is injected into the exhaust stream, there is a risk that residues/precipitates/crystallisations of additive are formed downstream of the dosage device injecting the additive into the exhaust stream e.g. in an evaporation chamber. Such additive residues/precipitates/crystallisations (hereafter commonly denoted residues) of additive being formed in the exhaust treatment system potentially increase the back pressure in the exhaust treatment system, and therefore potentially also increase the fuel consumption for the engine. Also, such additive residues in the exhaust treatment system may have a negative effect on the general purification performance of the exhaust treatment system, since the additive residues in the evaporation chamber reduces the evaporation efficiency, which may result in that too little evaporated additive reaches the SCR catalyst.

The increased back pressure and/or the less efficient exhaust purification of the exhaust treatment system may also result in a number of control system related problems. The one or more control systems arranged for controlling the exhaust treatment system may be unaware of these problems, and may thus keep on controlling the system based on the assumption that the back pressure is not increased and/or that an efficient reduction of nitrogen oxides $NO_x$ is effected by the system.

Also, if too little additive is injected into the exhaust stream, the reduction of the nitrogen oxides $NO_x$ in the exhausts may become deficient/unacceptable, and may result in that requirements in emission standards are not fulfilled.

An object of the present invention is at least partly solve at least some of the above mentioned problems/disadvantages.

The object is achieved through the above mentioned method for controlling a dosage device and/or an engine, in accordance with the features of claim 1.

According to an embodiment of the present invention, the at least one time dependent condition $C_i$ is determined based also on one or more of an exhaust mass flow $\dot{M}_{exh}$ of the exhaust stream, and an additive mass flow $\dot{M}_{add}$ being injected by the dosage device into the exhaust stream.

According to an embodiment of the present invention, the at least one interpretation of the internal temperature $T_i$ is determined based on one or more in the group of:

- at least one temperature model for the evaporation chamber, and at least one measurement of an exhaust temperature $T_{exh}$ for the exhaust stream performed by at least one temperature sensor arranged upstream the evaporation chamber in the exhaust treatment system; and
- at least one temperature model for the evaporation chamber (280), and at least one prediction of an exhaust temperature $T_{exh}$ for the exhaust stream in the exhaust treatment system upstream the evaporation chamber.

According to an embodiment of the present invention, the at least one interpretation of the internal temperature $T_i$ is determined based also on at least one measurement of the internal temperature $T_i$ performed by at least one internal temperature sensor arranged at the at least one position $P_i$ at the internal wall of the evaporation chamber.

According to an embodiment of the present invention, the at least one interpretation of the internal temperature $T_i$ is determined as a virtual temperature composed by a combination of the actual measured evaporation chamber wall temperature $T_{i\_wall}$ and the measured and/or predicted exhaust temperature $T_{exh}$; $T_i = x * T_{i\_wall} + y * T_{exh}$.

According to an embodiment of the present invention, the temperature model utilizes the exhaust temperature $T_{exh}$ for the exhaust stream, the exhaust mass flow $\dot{M}_{exh}$, and the additive mass flow $\dot{M}_{add}$ being injected into the exhaust stream as input parameters.

According to an embodiment of the present invention,

- the temperature model is determined by numerical and/or physical experiments resulting in an experimental temperature profile $T_{exp\_prof}$ having a spatial temperature resolution of at least one experimental position $P_{exp}$ corresponding to the at least one position $P_i$ of the evaporation chamber, respectively; and
- the at least one interpretation of the internal temperature $T_i$ related to the at least one position $P_i$ of the evaporation chamber corresponds to at least one experimental temperature $T_{exp\_i}$ of the experimental temperature profile $T_{exp\_prof}$ for at least one corresponding experimental position $P_{exp\_i}$, respectively.

According to an embodiment of the present invention,

- at least one experimental cold position $P_{exp\_cold}$ of the experimental temperature profile $T_{exp\_prof}$ is identified based on the experimental temperature profile $T_{exp\_prof}$; and
- at least one cold position $P_{i\_cold}$ at the internal wall of the evaporation chamber is determined as being at least one position related to an increased risk for the at least one critical condition $C_{i\_critical}$, the at least one cold position $P_{i\_cold}$ being determined as corresponding to the at least one experimental cold position $P_{exp\_cold}$. In this document, when it is stated that there is a risk for at least one critical condition Critical at/for/of/related to the at least one cold position $P_{i\_cold}$, this includes that there is a risk for at least one critical condition $C_{i\_critical}$ at least in and/or downstream the at least one cold position $P_{i\_cold}$. Correspondingly, a temperature $T_i$ and/or a time dependent condition $C_i$ at/for/or/related to at least one position $P_i$ includes at least a temperature and/or a time dependent condition in and/or downstream of the at least one position $P_i$.

As mentioned above, the internal temperature $T_i$ may, according to some embodiments be the actual evaporation chamber wall temperature $T_{i\_wall}$ for the least one position $P_i$; $T_i = T_{i\_wall}$; and/or may be a virtual temperature composed by a combination of the actual wall temperature $T_{i\_wall}$ and the exhaust temperature $T_{exh}$; $T_i = x * T_{i\_wall} + y * T_{exh}$.

According to an embodiment of the present invention, the exhaust mass flow $\dot{M}_{exh}$ is determined based on at least one in the group of:

- at least one mass flow model for the exhaust treatment system;
- an amount of fuel and an amount of air being input into cylinders of the engine; and
- at least one measurement of the exhaust mass flow $\dot{M}_{exh}$ for the exhaust stream performed by at least one mass flow sensor arranged upstream the evaporation chamber in the exhaust treatment system.

According to an embodiment of the present invention, the at least one time dependent condition $C_i$ is

related to a mass $M_{add\_wall}$ of the additive being present at the at least one position $P_i$ at the internal wall of the evaporation chamber. According to an embodiment of the present invention, the mass $M_{add\_wall}$ of the additive is determined based at least on one or more of the at least one interpretation of the internal temperature $T_i$, the additive mass flow $\dot{M}_{add}$ being injected into the exhaust stream, the exhaust mass flow $\dot{M}_{exh}$ for the exhaust stream, and a time period $t_{add}$ during which the additive is injected into the exhaust stream.

According to an embodiment of the present invention, the control of the dosage device includes control of one or more in the group of:

- the additive mass flow $\dot{M}_{add}$ being injected into the exhaust stream; and
- a time period $t_{add}$ during which the additive is injected into the exhaust stream.

According to an embodiment of the present invention, the control of the engine includes control of one or more in the group of:

- control of at least one injection strategy for the engine;
- control of a timing for an injection of fuel into cylinders of the engine;
- control of an injection pressure for an injection of fuel into cylinders of the engine;
- control of an injection phasing for an injection of fuel into cylinders of the engine; and
- control of a device for exhaust recirculation (EGR).

The object is also achieved through the above mentioned computer program and computer-readable medium.

The object is achieved also through the above-mentioned system arranged for controlling a dosage device and/or an engine, in accordance with the features of claim 14.

According to an embodiment of the present invention, the first determining unit is arranged for determining the at least one time dependent condition $C_i$ based also on one or more of an exhaust mass flow $\dot{M}_{exh}$ of the exhaust stream, and an additive mass flow $\dot{M}_{add}$ being injected by the dosage device into the exhaust stream.

According to an embodiment of the present invention, the system includes means, e.g. a temperature determining unit, arranged for determining at least one interpretation of the internal temperature $T_i$ based on one or more in the group of:

- at least one temperature model for the evaporation chamber, and at least one measurement of an exhaust temperature $T_{exh}$ for the exhaust stream performed by at least one temperature sensor arranged upstream the evaporation chamber in the exhaust treatment system;
- at least one temperature model for the evaporation chamber, and at least one prediction of an exhaust temperature $T_{exh}$ upstream the evaporation chamber in the exhaust stream.

According to an embodiment of the present invention, the temperature determining unit/means is arranged for determining the at least one interpretation of the internal temperature $T_i$ based also on at least one measurement of the at least one internal temperature $T_i$ performed by at least one internal temperature sensor arranged at the at least one position $P_i$ at the internal wall of the evaporation chamber.

According to an embodiment of the present invention, the temperature determining unit/means is arranged for determining the at least one interpretation of the internal temperature $T_i$ as a combination of the measured and/or predicted exhaust temperature $T_{exh}$ for said exhaust stream and at least one measured internal wall temperature $T_{i\_wall}$; $T_i = x * T_{i\_wall} + y * T_{exh}$.

According to an embodiment of the present invention, the temperature determining unit/means is arranged for utilizing the exhaust temperature $T_{exh}$ for the exhaust stream, the exhaust mass flow $\dot{M}_{exh}$, and the additive mass flow $\dot{M}_{add}$ being injected into the exhaust stream as input parameters for the temperature model.

According to an embodiment of the present invention, the temperature determining unit/means is arranged for:

- determining the temperature model by numerical and/or physical experiments resulting in an experimental temperature profile $T_{exp\_prof}$ having a spatial temperature resolution of at least one experimental position $P_{exp}$ corresponding to the at least one position $P_i$ of the evaporation chamber, respectively; and
- defining the at least one interpretation of the internal temperature $T_i$ for the at least one position $P_i$ of the evaporation chamber as corresponding to at least one experimental temperature $T_{exp\_i}$ of the experimental temperature profile $T_{exp\_prof}$ for at least one corresponding experimental position $P_{exp\_i}$, respectively.

According to an embodiment of the present invention, the second determining unit/means is arranged for:

- identifying at least one experimental cold position

$P_{exp\_cold}$ of the experimental temperature profile $T_{exp\_prof}$ based on the experimental temperature profile $T_{exp\_prof}$; and

- determining at least one cold position $P_{i\_cold}$ at the internal wall of the evaporation chamber as being at least one position related to an increased risk for the at least one critical condition $C_{i\_critical}$, the at least one cold position $P_{i\_cold}$ being determined as corresponding to the at least one experimental cold position $P_{exp\_cold}$.

According to an embodiment of the present invention, means, e.g. a mass flow determining unit, is arranged for determining the exhaust mass flow $\overset{\bullet}{M}_{exh}$ based on at least one in the group of:

- at least one mass flow model for the exhaust treatment system;
- an amount of fuel and an amount of air being input into cylinders of the engine; and
- at least one measurement of the exhaust mass flow $\overset{\bullet}{M}_{exh}$ for the exhaust stream performed by at least one mass flow sensor arranged upstream the evaporation chamber in the exhaust treatment system.

According to an embodiment of the present invention, the second determination unit/means is arranged for relating the at least one time dependent condition $C_i$ to a mass $M_{add\_wall}$ of the additive being present at the at least one position $P_i$ at the internal wall of the evaporation chamber.

According to an embodiment of the present invention, the second determination unit/means is arranged for determining the mass $M_{add\_wall}$ of the additive based at least on one or more of the at least one internal temperature $T_i$, the additive mass flow $\overset{\bullet}{M}_{add}$ being injected into the exhaust stream, the exhaust mass flow $\overset{\bullet}{M}_{exh}$ for the exhaust stream, and a time period $t_{add}$ during which the additive is injected into the exhaust stream.

According to an embodiment of the present invention, means, e.g. a control unit, is arranged for controlling the dosage device by control of one or more in the group of:

- the additive mass flow $\overset{\bullet}{M}_{add}$ being injected into the exhaust stream; and
- a time period $t_{add}$ during which the additive is injected into the exhaust stream.

According to an embodiment of the present invention, means, e.g. a control unit is arranged for controlling the engine by control of one or more in the group of:

- control of at least one injection strategy for the engine;
- control of a timing for an injection of fuel into cylinders of the engine;

- control of an injection pressure for an injection of fuel into cylinders of the engine;
- control of an injection phasing for an injection of fuel into cylinders of the engine; and
- control of a device for exhaust recirculation (EGR).

By the use of the present invention, the performance of the evaporation chamber is improved regarding an amount of additive being possible to evaporate. Also, the robustness of the evaporation chamber, and of the control of the injection of the additive, is increased.

Thus, the amount of additive to be injected into the exhaust stream may, by use of the present invention, be precisely controlled, such that the evaporation of the injected additive is improved. Hereby, the amount of additive to be injected may also be increased in some situations, whereby the efficiency of the reduction of the nitrogen oxides $NO_x$ in the one or more reduction catalyst devices using additives for their reduction may be considerably increased.

An exhaust treatment system implementing the present invention therefore has potential to meet the emission requirements in the Euro VI emission standard. Additionally, the exhaust treatment system according to the present invention has potential to meet the emission requirements in several other existing and/or future emission standards. The invention may also be generally used for improving the control of a dosage device and/or an engine, resulting in e.g. improved fuel efficiency and/or reduced fuel consumption.

Also, the exhaust back pressure may be reduced in the exhaust treatment system, due to the reduced risk for additives forming residues in the system. This reduced back pressure also reduces the fuel consumption for the engine.

For some situations, for example a larger dosage amount (a more ample dosage) may be allowed to be injected by the additive dosage device when the present invention is used, than has been allowed in known solutions. This more ample dosage of additives may be viewed as a more aggressive dosage, providing dosage amounts closer to, or even above, a dosage threshold value at which a risk for creating residues of additive arises. However, since the ability for the evaporation chamber to evaporate the injected additive is improved, and is also much better defined and/or possible to control, a more aggressive dosage of additive may be used without risk for creating residues when the present invention is used.

The at least one time dependent condition $C_i$ of at least one position $P_i$ is, according to the present invention, determined based e.g. on at least one interpretation of the internal temperature $T_i$ related to the at least

one position $P_i$ at the internal wall of the evaporation chamber, i.e. related to positions in and/or downstream the at least one position $P_i$. Thus, a very precise/exact interpretation of the internal temperature $T_i$ related to the potential point of contact for the additive with the evaporation chamber wall may be used when determining the time dependent condition $C_i$. Also, since the determined risk for at least one critical condition $C_{i\_critical}$ is based on the at least one time dependent condition $C_i$, also the risk for at least one critical condition $C_{i\_critical}$ is based on this precise and exact interpretation of the internal temperature $T_i$.

This exact and reliable determination of the risk for at least one critical condition $C_{i\_critical}$ may be compared to some already known methods for controlling the dosage of the additive. In such known methods, a general exhaust temperature $T_{exh}$ for the exhaust stream is measured by a temperature sensor upstream of the evaporation chamber, and the dosage of the additive is then chosen from a number of predetermined dosage amounts solely based on the general exhaust temperature $T_{exh}$. Thus, the features of the evaporation chamber and/or the exhaust treatment system were not taken into consideration in the known methods. These known dosage control methods are thus not adapted to the actual resulting temperatures at the internal wall of the evaporation chamber. The known dosage control methods are therefore not very exact, and must include large safety intervals/margins excluding injection of additives, since the known systems are not certain whether forming of residues can be avoided or not. Thus, the known systems/methods must make decisions based on incomplete and/or inexact available information, wherefore the safety intervals/margins must be rather extensive. The rather extensive safety intervals/margins being used for the known methods make it impossible in many situations to perform an optimized dosage/injection of additive.

When the present invention is used, however, the control of the dosage of additive and/or of the engine is based on the precise/exact interpretation of the internal temperature $T_i$ related to the potential point of contact $P_i$ where the additive actually will hit the evaporation chamber wall, since the control is based on a risk for at least one critical condition $C_{i\_critical}$ taking this interpretation of the internal temperature $T_i$ into consideration. The determined risk for at least one critical condition $C_{i\_critical}$, on which the control of the dosage of additive and/or of the engine is based, has a spatial resolution along the internal wall of the evaporation chamber. The determined risk for at least one critical condition $C_{i\_critical}$ may also have a temporal resolution, since it may be determined momentarily such that it includes changes over time.

Therefore, the control of the dosage of additive and/or of the engine may be performed in a much more optimized way when the present invention is used, allowing also a control much closer to the limits where residues may be formed. This is possible since the control according to the present invention is much more accurate and reliable than the control of the known methods. The present invention therefore for example makes it possible to, in some situations, in a controlled fashion inject more additive, i.e. to inject additive more aggressively, into the exhaust stream than was possible in known methods, whereby a more efficient reduction of nitrogen oxides $NO_x$ is possible for the exhaust treatment system. The present invention therefore also makes it possible to, in some situations, run the engine such that the temperature $T_{exh}$ of the exhaust stream is lower and/or run the engine more fuel efficient than was possible to safely do when the known methods were used.

Through the use of the present invention, a better fuel consumption optimisation may be obtained for the vehicle, since there is potential to control the engine in a more fuel efficient manner, due to a possibly more efficient reduction of nitrogen oxides $NO_x$. Thus, a higher output of nitrogen oxides $NO_x$ from the engine may be allowed, since nitrogen oxides $NO_x$ may be efficiently reduced by the exhaust treatment system, whereby a higher efficiency for the engine is obtained.

## Brief list of figures

The invention will be illustrated in more detail below, along with the enclosed drawings, where similar references are used for similar parts, and where:

Figure 1 schematically shows an example vehicle, in which the present invention may be implemented,

Figure 2 schematically shows a traditional exhaust treatment system, in which the present invention may be implemented,

Figure 3 schematically shows a part of an exhaust treatment system, in which the present invention may be implemented,

Figure 4 shows a flow chart for a method according to an embodiment of the present invention,

Figure 5 shows a control device, in which the embodiments of the present invention may be implemented.

## Description of preferred embodiments

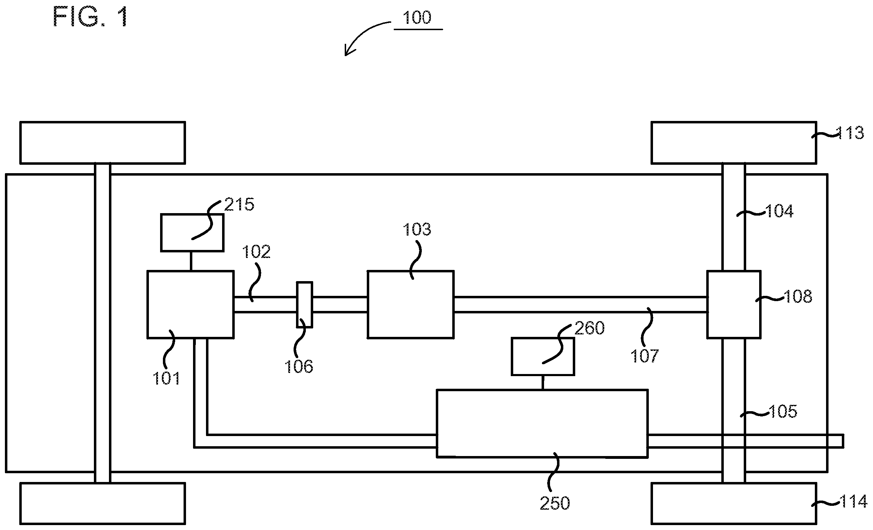

Figure 1 schematically shows an example vehicle 100 comprising an exhaust treatment system 250. The powertrain comprises a combustion engine 101, which in a customary manner, via an output shaft 102 on the combustion engine 101, usually via a flywheel, is connected to a gearbox 103 via a clutch 106.

The combustion engine 101 is controlled by the engine's control system via a control device 215. Likewise, the clutch 106 and the gearbox 103 may be controlled by the vehicle's control system, with the help of one or more applicable control devices (not shown). Naturally, the vehicle's powertrain may also be of another type, such as a type with a conventional automatic gearbox, of a type with a hybrid powertrain, etc. A Hybrid powertrain may include the combustion engine and at least one electrical motor, such that the power/torque provided to the clutch/gearbox may be provided by the combustion engine and/or the electric motor.

An output shaft 107 from the gearbox 103 drives the wheels 113, 114 via a final drive 108, such as e.g. a customary differential, and the drive shafts 104, 105 connected to the final drive 108.

The vehicle 100 also comprises an exhaust treatment system/exhaust purification system 250 for treatment/purification of exhaust emissions resulting from combustion in the combustion chamber of the combustion engine 101, which may comprise cylinders.

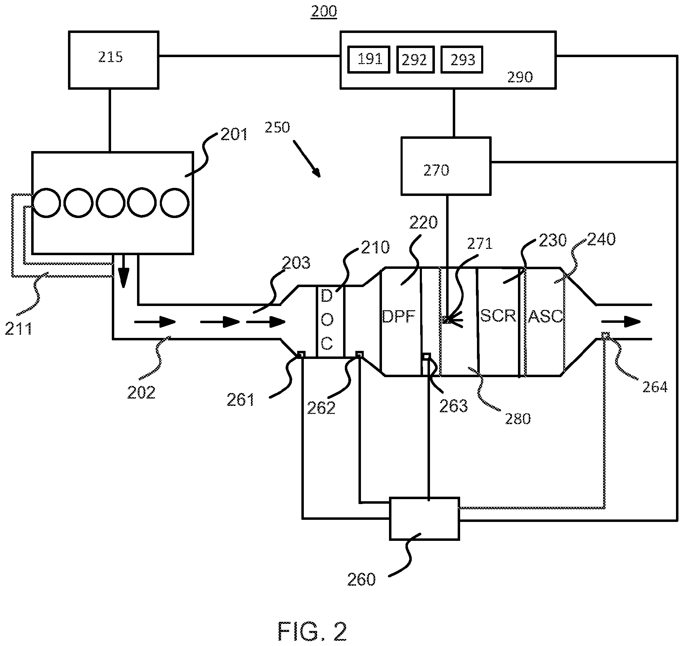

Figure 2 schematically shows an exhaust treatment system 250, in which the present invention may be implemented. The system 250 may illustrate a system fulfilling the above mentioned Euro VI standard, and which is connected to a combustion engine 201 via an exhaust conduit 202, wherein the exhausts generated at combustion, that is to say the exhaust stream 203, is indicated with arrows. The exhaust stream 203 is led to a diesel particulate filter (DPF) 220, via a diesel oxidation catalyst (DOC) 210. During the combustion in the combustion engine, soot particles are formed, and the particulate filter 220 is used to catch these soot particles. The exhaust stream 203 is here led through a filter structure, wherein soot particles from the exhaust stream 203 are caught passing through, and are stored in the particulate filter 220.

The oxidation catalyst DOC 210 has several functions and is normally used primarily to oxidise, during the exhaust treatment, remaining hydrocarbons $C_xH_y$ (also referred to as HC) and carbon monoxide CO in the exhaust stream 203 into carbon dioxide $CO_2$ and water $H_2O$. The oxidation catalyst DOC 210 may also oxidise a large fraction of the nitrogen monoxides NO occurring in the exhaust stream into nitrogen dioxide $NO_2$. The oxidation of nitrogen monoxide NO into nitrogen dioxide $NO_2$ is important for the nitrogen dioxide based soot oxidation in the filter, and is also advantageous at a potential subsequent reduction of nitrogen oxides $NO_x$. In this respect, the exhaust treatment system 250 further comprises a reduction catalyst device 230, possibly including an SCR (Selective Catalytic Reduction) catalyst, downstream of the particulate filter DPF 220. SCR catalysts use ammonia $NH_3$, or a composition from which ammonia may be generated/formed, e.g. urea, as an additive for the reduction of nitrogen oxides $NO_x$ in the exhaust stream. The reaction rate of this reduction is impacted, however, by the ratio between nitrogen monoxide NO and nitrogen dioxide $NO_2$ in the exhaust stream, so that the reductive reaction is impacted in a positive direction by the previous oxidation of NO into $NO_2$ in the oxidation catalyst DOC. This applies up to a value representing approximately 50% of the molar ratio $NO_2/NO_x$.

As mentioned above, the reduction catalyst device 230, including e.g. the SCR-catalyst, requires additives to reduce the concentration of a compound, such as for example nitrogen oxides $NO_x$, in the exhaust stream 203. Such additive is injected into the exhaust stream upstream of the reduction catalyst device 230 by a dosage device 271 being provided with additive by an additive providing system 270. Such additive often comprises ammonia and/or is urea based, or comprises a substance from which ammonia may be extracted or released, and may for example comprise AdBlue, which basically comprises urea mixed with water. Urea forms ammonia at heating (thermolysis) and at heterogeneous catalysis on an oxidizing surface (hydrolysis), which surface may, for example, comprise titanium dioxide $TiO_2$, within the SCR-catalyst. The additive is evaporated in an evaporation chamber 280. The exhaust treatment system may also comprise a separate hydrolysis catalyst.

The exhaust treatment system 250 may also be equipped with an ammonia slip-catalyst (ASC) 240, which is arranged to oxidise a surplus of ammonia that may remain after the reduction catalyst device 230. Accordingly, the ammonia slip-catalyst ASC may provide a potential for improving the system's total conversion/reduction of NOx.

The exhaust treatment system 250 may also be equipped with one or several sensors, such as one or several $NO_x$-, temperature and/or mass flow sensors 261, 262, 263, 264 for the determination of measured values for nitrogen oxides, temperatures and/or mass flow in the exhaust treatment system.

A control device/system/means 290 may be arranged/configured for performing the present invention. The control device/system/means 290 is in figure 2 illustrated as including separately illustrated units 291, 292, 293 arranged for performing the present invention, as is described below. Also, as described herein, an engine control device/system/means 215 may be arranged for controlling the engine 201, a control system/means 260 may be arranged for controlling the additive providing system 270 and/or the dosage device 271, and a control device/means 500 may be implemented for performing embodiments of the invention. These means/units/devices systems 290, 291, 292, 293, 215, 260, 500 may, however be at least to some extent logically separated but physically implemented in at least two different physical units/devices. These means/units/devices 290, 291, 292, 293, 215, 260, 500 may also be at least to some extent logically separated and implemented in at least two different physical means/units/devices. Further, these means/units/devices 290, 291, 292, 293, 215, 260 may be both logically and physically arranged together, i.e. be part of a single logic unit which is implemented in a single physical means/unit/device. These means/units/devices 290, 291, 292, 293, 215, 260, 500 may for example correspond to groups of instructions, which may be in the form of programming code, that are input into, and are utilized by at least one processor when the units are active and/or are utilized for performing its method step, respectively. It should be noted that the control system/means 290 may be implemented at least partly within the vehicle 100 and/or at least partly outside of the vehicle 100, e.g. in a server, computer, processor or the like located separately from the vehicle 100.

As mentioned above, the units 291, 292, 293 described above correspond to the claimed means 291, 292, 293 arranged for performing the embodiments of the present invention, and the present invention as such.

In the exhaust treatment system 250, there is, as mentioned above, a risk that the relatively cold reductant/additive cools down components, especially the evaporation chamber 280, of the exhaust treatment system, and may thereby give rise to residues/precipitates/crystallisations (herein commonly denoted residues) in these components. This risk of residuals downstream of the injection device 271 increases if the injected amount of reductant is large.

The temperature of the exhaust treatment system itself, e.g. the temperature in the evaporation chamber 280 and/or in the reduction catalyst device 230, may depend on a number of factors, such as how the driver drives the vehicle. For example, the temperature may depends on the torque requested by a driver and/or by a cruise control, on the appearance/features of the road section in which the vehicle is located, and/or the driving style of the driver.

The function and efficiency for catalysts in general, and for reduction catalyst devices in particular, is normally strongly dependent on the temperature over the reduction catalyst device. The term temperature of the exhaust treatment system/component as used herein, means the temperature in/at/for the exhaust stream flowing through the components of the exhaust treatment system. The components, e.g. the catalyst substrates, will also assume this temperature due to their heat exchanging ability.

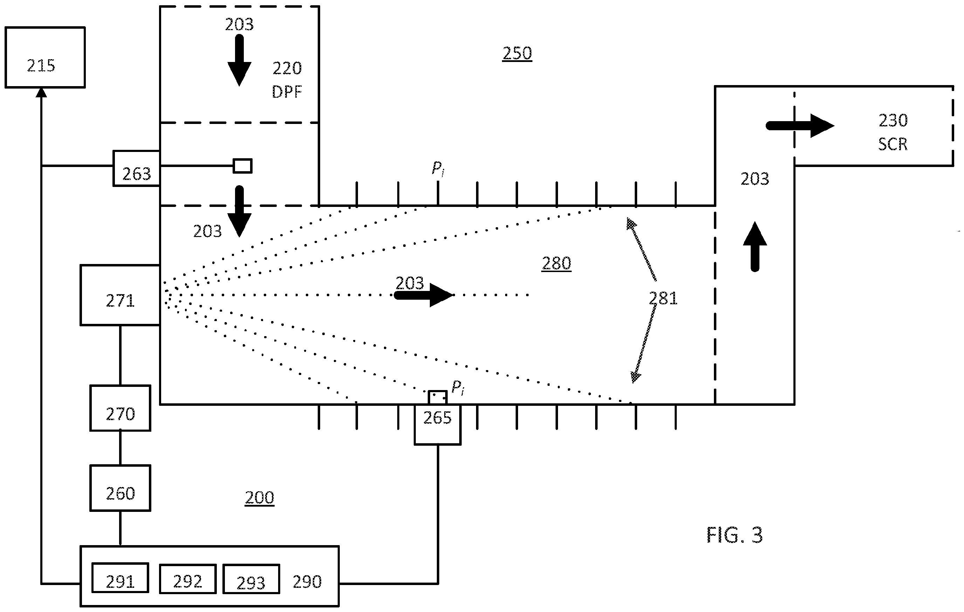

Figure 3 schematically illustrates some components of the exhaust treatment system 250 through which the exhaust stream 203 passes. The shown components of the exhaust system 250 includes the particulate filter DPF 220, the evaporation chamber 280, the reduction catalyst device 230, the dosage device 271 and the additive providing system 270 being controlled by a control system 260. A control device 290 illustrated in figure 3 includes at least the herein described units/means 291, 292, 293, and is arranged for performing the present invention. The control device 290 is coupled/connected to the control system 260 arranged for controlling the additive providing system 270 and/or the dosage device 271.

The control device 290 is also coupled/connected to an engine control device 215 arranged for controlling the engine 201.

The control device 290 is also coupled/connected to temperature/flow/NO$_x$-sensors 263, 265.

Figure 3 will be used for explaining the present invention, and is for that reason simplified.

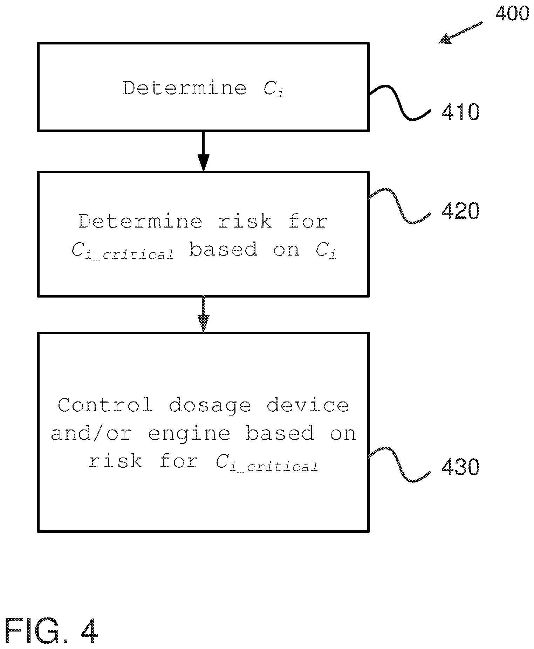

Figure 4 shows a flow chart diagram illustrating a method 400 according to an embodiment of the present invention.

The method 400 controls at least one of a dosage device 271 and an engine 201. As explained above, the engine 201 produces an exhaust stream 203 being treated by an exhaust treatment system 250 by use of at least one additive being injected into the exhaust stream 203 by the dosage device 271.

The additive is injected into an evaporation chamber 280 when being injected into the exhaust stream 203, and the additive is there evaporated. Hereby, the additive is provided to the reduction catalyst device 230 in gaseous form downstream of the dosage device 271 and evaporation chamber 280, which makes the function of the reduction catalyst device 230 efficient. The injection of the additive into the evaporation chamber 280 is in figure 3 schematically illustrated as dotted lines. The additive may reach/end up at an inner/internal wall 281 inside of the evaporation chamber 280. The internal wall 281 of the evaporation chamber 280 may be divided into sections/positions $P_i$ along the length of the evaporation chamber 280, i.e. in the flow direction of the exhaust stream 203 flowing through the evaporation chamber 280.

In a first step 410 of the method, at least one time dependent condition $C_i$ of at least one position $P_i$ at an internal wall 281 of the evaporation chamber 280 is determined. The at least one time dependent condition $C_i$ is determined at least based on at least one interpretation of the internal temperature $T_i$ for the at least one position $P_i$, respectively, the at least one representation of the internal temperature $T_i$ being determined based on at least one temperature model for the evaporation chamber 280 and one or more of at least one measurement and at least one prediction of an exhaust temperature $T_{exh}$ for the exhaust stream 203 upstream the evaporation chamber 280 in said exhaust treatment system.

According to an embodiment of the present invention, the at least one time dependent condition $C_i$ is determined based also on one or more of an exhaust mass flow $\dot{M}_{exh}$ of the exhaust stream 203, and an additive mass flow $\dot{M}_{add}$ being injected by the dosage device 271 into the exhaust stream 203.

In a second step 420, a risk for at least one critical condition $C_{i\_critical}$ related to the at least one position $P_i$, e.g. at the at least one position $P_i$, is determined based on the least one determined time dependent condition $C_i$ such that the risk for at least one critical condition $C_{i\_critical}$ has a spatial resolution along the internal wall of the evaporation chamber 280. Thus, the time dependent condition $C_i$ may be analyzed to determine for example if there is a risk for formation of additive residues along the internal wall 281, such residues being included in the one or more possible critical conditions $C_{i\_critical}$.

In this document, the one or more possible critical conditions $C_{i\_critical}$ is pedagogic reasons often exemplified as including, and/or being related to, creation of residues. However, the present invention is not limited only to residues being the critical conditions $C_{i\_citical}$. For example, these one or more possible critical conditions $C_{i\_critical}$ may also be related to performance problems for the evaporation chamber 280, i.e. problems resulting in a poor evaporation of the additive, leading to insufficient reduction of nitrogen oxides $NO_x$ and/or robustness problems resulting in deposits/residues.

As mentioned above, the risk for e.g. creation of additive residues at the internal wall 281 may generally be increased at lower exhaust temperatures $T_{exh}$, at lower exhaust mass flow , and at higher additive mass flow

$$\dot{M}_{add}$$

, which is reflected in the determined time dependent condition $C_i$. According to an embodiment of the present invention, the at least one time dependent condition $C_i$ therefore includes the at least one interpretation of the internal temperature $T_i$.

In a third step 430, at least one of the dosage device 271 and the engine 201 is controlled based on the determined risk for at least one critical condition $C_{i\_critical}$.

By this control 430 of the dosage device 271, the amount of additive being injected into the exhaust stream may for example be decreased if it is determined that there is a high risk $C_{i\_critical}$ for forming of additive residues, i.e. if residues are probable to occur. Correspondingly, if it is determined that there is a low, or no, risk for forming residues, the amount of injected additive may be increases, if necessary for achieving an efficient reduction of nitrogen oxides $NO_x$ in the downstream at least one arranged reduction catalyst device 230.

According to an embodiment of the present invention, the control 430 of the dosage device 271, which is performed based on the determined risk for at least one critical condition $C_{i\_critical}$. includes control of the ad-

ditive mass flow $\dot{M}_{add}$ being injected into the exhaust stream 203 and/or control of a time period $t_{add}$ during which the additive is injected into the exhaust stream 203. Thus, the amount of additive being injected into the exhaust stream 203 is controlled based on the determined critical condition risk $C_{i\_critical}$, e.g. based on the determined risk for additive residues at the internal wall 281 of the evaporation chamber. The more additive being injected, the colder the internal wall 281 gets, since it is cooled down by the additive. Correspondingly, the less additive being injected, the less cooling effect will reach the internal wall. Thus, if it is determined as a critical condition risk $C_{i\_critical}$ that it is likely that additive residues will be created at the internal wall 281, the amount of injected additive may be reduced, by reducing the addi-

tive mass flow $\dot{M}_{add}$ and/or the time period $t_{add}$ for injection of the additive.

By the control 430 of the engine 201, the exhaust temperature $T_{exh}$ for the exhaust stream 203 may be increased and/or the amount of outputted nitrogen oxides $NO_x$ may be reduced if it is determined that there is a high risk $C_{i\_critical}$ for forming of additive residues, i.e. if residues are probable to occur. Correspondingly, the temperature $T_{exh}$ for the exhaust stream 203 may be decreased and/or the amount of outputted nitrogen oxides $NO_x$ may be increased if it is determined that there is low, or no, risk for forming of residues, whereby the engine may be run more efficiently regarding e.g. fuel consumption if the probability for formation of residues is low. The temperature $T_{exh}$ for the exhaust stream 203 and/or the amount of outputted nitrogen oxides $NO_x$ may be controlled e.g. by adaption of the engine load/torque and/or the revolutions per minute (RPM) for the engine 201.

As a non-liming example, if it is determined that there is a high risk $C_{i\_critical}$ for formation of additive residues when the dosage device 271 injects 20 grams of additive per minute, this risk may be mitigated by some embodiments of the present invention by reducing the injection of additive to 15 grams per minute, by increasing the exhaust mass flow $\dot{M}_{exh}$ by 500 kilos per hour, and/or by increasing the exhaust temperature $T_{exh}$ with 50 °C. by performing one or more of these actions, the risk $C_{i\_critical}$ for forming of additive residues is considerably reduced, and additive residues may be efficiently avoided.

According to an embodiment of the present invention, the control 430 of the engine 201, which is performed based on the determined risk for at least one critical condition $C_{i\_critical}$, includes a control of at least one injection strategy for the engine 201.

According to one embodiment of the present invention, the timing of fuel injections into the respective cylinders in the engine may be controlled, so that at least the nitrogen oxides $NO_x$ output from the engine 201 and/or the temperature $T_{exh}$ of the exhaust stream 203 is controlled. Often, the output nitrogen oxides $NO_x$ and/or the temperature $T_{exh}$ of the exhaust stream 203 are relatively easily controlled.

For example, if the determined risk for at least one critical condition Critical indicates that it is likely that residues will form on the internal wall 281, temperature $T_{exh}$ of the exhaust stream 203 may be controlled to be increased by adjusting the injections in time.

According to one embodiment of the present invention, an injection pressure for an injection of fuel into cylinders of the engine 201 is controlled, whereby at least the nitrogen oxides $NO_x$ and/or the exhaust temperature $T_{exh}$ output from the engine 201 is controlled. For example, an increase of the exhaust temperature $T_{exh}$ may be performed by adjusting the injection pressure if a risk additive residues is indicated by the at least one critical condition $C_{i\_critical}$.

According to one embodiment of the present invention, an injection phasing for an injection of fuel into cylinders of the engine 201 is controlled. At least the nitrogen oxides $NO_x$ and/or the exhaust temperature $T_{exh}$ output from the engine 201 may then be controlled, e.g. for reducing the nitrogen oxides $NO_x$ if a risk for additive residues is indicated by the at least one critical condition $C_{i\_critical}$, by adjusting the injection phasing.

According to an embodiment of the present invention, the control 430 of the engine 201, which is performed based on the determined risk for at least one critical condition $C_{i\_critical}$, includes a control of a device for exhaust recirculation (EGR) 211 (schematically illustrated in figure 2). Generally, the evaporation of the additive is controlled by controlling the exhaust mass flow $\dot{M}_{exh}$

. The exhaust mass flow $\dot{M}_{exh}$ may e.g. be controlled if the engine is provided with an exhaust gas recirculation (EGR) device, as described below.

Combustion engines are supplied with air at an inlet, to achieve a gas mixture which is suitable for combustion, together with fuel that is also supplied to the engine. The combustion takes place in the engine's cylinders, wherein the gas mixture is burned. The combustion generates exhausts, which leave the engine at an outlet. The exhaust recirculation conduit 211 is arranged from the outlet of the engine to its inlet, and leads back a part of the exhausts from the outlet to the inlet. Thus, the suction losses at the air intake may be reduced, and the exhaust mass flow $\dot{M}_{exh}$ output from the engine 201 may be controlled/adjusted.

An increased exhaust mass flow $\dot{M}_{exh}$ , an increased output of nitrogen oxides $NO_x$ and/or an increased exhaust temperature $T_{exh}$ may be achieved by decreasing the fraction of the exhaust stream which is recirculated through the EGR device 211. For example, an increased exhaust mass flow $\dot{M}_{exh}$ may be useful if a higher risk for additive residues is indicated by the at least one critical condition $C_{i\_critical}$. Correspondingly, e. g. a decreased exhaust mass flow $\dot{M}_{exh}$ may be achieved by increasing the fraction of the exhaust stream, which is recirculated through EGR device 211.

According to an embodiment of the present invention, the control 430 of the dosage device 271 is based also on a maximal allowed time period $t_{add\_max}$ for the at least one time dependent condition $C_i$. The maximal allowed time period $t_{add\_max}$ indicates a maximal time it is possible to stay in the at least one time dependent condition $C_i$ without taking action, such as altering the control of the dosage device 271 and/or altering the control of the engine 201, and still avoid to end up in a critical condition $C_{i\_critical}$. The maximal allowed time period $t_{add\_max}$ may e.g. be determined based on numerical and/or physical experiments for the evaporation chamber, corresponding to the ones mentioned above for the temperature model.

The amount of additive to be injected into the exhaust stream may, by use of the present invention, be precisely controlled, such that the evaporation of the injected additive is improved/optimized.

The at least one time dependent condition $C_i$ of at least one position $P_i$ may, according to the present invention, be determined based on one or more precise/exact interpretation of the internal temperatures $T_i$ related to the potential point of contact $P_i$ for the additive with the evaporation chamber wall 281. Also, the determined risk for at least one critical condition $C_{i\_critical}$ is then based on the at least one time dependent condition $C_i$, wherefore also the risk for at least one critical condition $C_{i\_critical}$ is determined based on this precise/exact interpretation of the internal temperature $T_i$ at the internal wall 281 of the evaporation chamber.

Thus, the control of the dosage of additive and/or of the engine according to the present invention is very accurate and precise, since it may be based on the very precise/exact interpretation of the internal wall temperature $T_i$. Hereby, the control of the dosage of additive and/or of the engine may be performed in an optimized way, e.g. facilitating injecting additive more aggressively into the exhaust stream.

Further, the control of the dosage of additive and/or of the engine may, according to an embodiment of the present invention, include an adjustment of the

exhaust mass flow $\dot{M}_{exh}$ and/or of the additive injection

mass flow $\dot{M}_{add}$ . Hereby, the spot/location where the additive hits the internal wall 281 of the evaporation chamber is also adjusted/changed/altered, which may be used for reducing the risk for critical conditions, since the area where the additive hits the internal wall may be increased, and since the spot where the additive hits the internal wall may also be changed/controlled. This is e.

g. due to the fact that the exhaust mass flow $\dot{M}_{exh}$

and/or the additive injection mass flow $\dot{M}_{add}$ influence where the additive will hit the internal wall 281 of the evaporation chamber. For example, a lower exhaust

mass flow $\dot{M}_{exh}$ may have the effect that the additive hits the wall closer to the dosage device 271, e.g. in a dotted additive stream line to the left in figure 3, than for a higher exhaust mass flow $\dot{M}_{exh}$ . A higher exhaust

mass flow $\dot{M}_{exh}$ would correspondingly result in that the additive hits the internal wall 281 farther away from the dosage device 271, e.g. in a dotted additive stream line to the right in figure 3.

Also, since the exhaust mass flow $\overset{\cdot}{M}_{exh}$ may be taken into consideration when determining the least one time dependent condition $C_i$, a very reliable determination of the least one time dependent condition $C_i$ is provided. As mentioned above, the exhaust mass flow $\overset{\cdot}{M}_{exh}$ influences where the additive will hit the internal wall 281 of the evaporation chamber. For example, a lower exhaust mass flow $\overset{\cdot}{M}_{exh}$ may have the effect that the additive hits the wall closer to the dosage device 271 than for a higher exhaust mass flow $\overset{\cdot}{M}_{exh}$. A higher exhaust mass flow $\overset{\cdot}{M}_{exh}$ would correspondingly result in that the additive hits the internal wall 281 farther away from the dosage device 271. Thus, if the exhaust mass flow $\overset{\cdot}{M}_{exh}$ is taken into account when determining the at least one time dependent condition $C_i$, also the impact the exhaust mass flow $\overset{\cdot}{M}_{exh}$ has on the internal wall temperature $T_i$ along the wall 281 is taken into account. This thus increases the accuracy of the control 430 of the dosage device 271 and/or the engine.

As mentioned above, the at least one time dependent condition $C_i$ is determined 410 at least based on at least one interpretation of the internal temperature $T_i$ for the at least one internal wall 281 position $P_i$, respectively, an exhaust stream mass flow $\overset{\cdot}{M}_{exh}$, and/or an additive injection mass flow $\overset{\cdot}{M}_{add}$. The at least one interpretation of the internal temperature $T_i$ may be determined in a number of ways. The at least one interpretation of the internal temperature $T_i$ may be determined dependently or independently of an upcoming/future operation of the engine and/or exhaust treatment system.

According to an embodiment of the present invention, the at least one interpretation of the internal temperature $T_i$ is determined based on at least one temperature model for the evaporation chamber 280. The at least one interpretation of the internal temperature $T_i$ may here be modelled as being embedded in the internal wall 281 of the evaporation chamber 280, i.e. as embedded within the material/castings of the evaporation chamber. Thus, the at least one interpretation of the internal temperature $T_i$ may be modelled as corresponding to the actual temperature at the internal wall 281 where the additive may come in contact with the evaporation chamber, whereby a very exact determination of the risk e.g. for formation of additive residues is achieved.

Here, the temperature model is used in combination with at least one measurement of an exhaust temperature $T_{exh}$ for the exhaust stream 203 in the exhaust treatment system 250, the measurement being performed by at least one temperature sensor 263 arranged upstream the evaporation chamber 280. Thus, the upstream 263 measured one or more temperature measurements are input into the temperature model, and the at least one interpretation of the internal temperature $T_i$ related to the at least one corresponding position $P_i$ at the internal wall 281 is determined. Since the at least one interpretation of the internal temperature $T_i$ may be modelled as being embedded within the internal wall 281 of the evaporation chamber, the at least one interpretation of the internal temperature $T_i$ may differ from the exhaust temperature $T_{exh}$ of the exhaust stream 203. For example, for temperature transient behavior, e.g. when the sprayed additive quickly changes the internal temperature $T_i$, the change of the at least one interpretation of the internal temperature $T_i$ is faster than the change of the exhaust temperature $T_{exh}$. However, when for example the exhaust temperature $T_{exh}$ changes rather quickly, such as e.g. in connection with a cold start demanding a higher engine load/torque after the engine and the exhaust treatment system initially having been cold, the change of the at least one interpretation of the internal temperature $T_i$ is much slower than the change of the exhaust temperature $T_{exh}$ due to the thermal inertia of the evaporation chamber 280.

Since the control 430 of the dosage device 271 and/or engine 201 according to the present invention may be based on the determined at least one interpretation of the internal temperature $T_i$ and thus may be based not only on the exhaust temperature $T_{exh}$, a very reliable control 430 may be provided. This is at least partly due to the fact that the control 430 is based on the actual temperature where e.g. additive residues could be created, i.e. is based on the at least one interpretation of the internal temperature $T_i$ at the internal wall 281 of the evaporation chamber. Known methods have instead based the control of the dosage device only on the exhaust temperature $T_{exh}$, which results in a much less reliable control, since the exhaust temperature $T_{exh}$ often differs from the at least one interpretation of the internal temperature $T_i$, as explained above.

According to an embodiment of the present invention, the at least one temperature model for the evaporation chamber 280 may also be used in combination with at least one prediction of an exhaust temperature $T_{exh}$ for the exhaust stream 250 in order to determine the at least one interpretation of the internal temperature $T_i$. The prediction may e.g. be based on one or more of a number of factors, including for example the torque requested by a driver and/or by a cruise control, on the appearance/features of the road section in which the vehicle is located, and/or the driving style of the driver.

According to an embodiment of the present invention, the at least one interpretation of the internal temperature $T_i$ is determined based on a combination of the exhaust temperature $T_{exh}$ upstream the evaporation chamber 280, which may be measured and/or predicted, and a on the at least one internal wall temperature $T_{i\_wall}$, which may be measured e.g. by sensor 265, modelled and/or calculated. The internal temperature $T_i$ may then be seen as a virtual temperature composed by a combination of the actual evaporation chamber wall temperature $T_{i\_wall}$ and the exhaust temperature $T_{exh}$; $T_i = x*T_{i\_wall}+y*T_{exh}$.

According to an embodiment of the present invention, the internal temperature $T_i$ is the actual temperature $T_{i\_wall}$ on the internal wall of the evaporation chamber for the least one position $P_i$; $T_i = T_{i\_wall}$.

The temperature model being used for determining the at least one interpretation of the internal temperature $T_i$ may use the exhaust temperature $T_{exh}$ for the exhaust stream 203, the exhaust mass flow $\overset{.}{M}_{exh}$, and/or the additive mass flow $\overset{.}{M}_{add}$ as input parameters. Hereby, the control 430 of the dosage device 271 and/or engine 201 according to the present invention takes into account the cooling effect on the internal wall 281 from the additive being injected, and the cooling effect on the internal wall 281 from the exhausts themselves. These cooling effects are taken into account since the at least one time dependent condition $C_i$ may also be based on the exhaust mass flow $\overset{.}{M}_{exh}$ of the exhaust stream 203, and on an injected additive mass flow $\overset{.}{M}_{add}$. Thus, the control 430 of the dosage device 271 and/or engine 201 according to the present invention may be based on a rather complete information related to a risk for a critical condition, such as e.g. a risk for forming of residues on the internal wall 281.

The temperature model may for example be determined/defined based on numerical and/or physical experiments. These experiments may then result in an experimental temperature profile $T_{exp\_prof}$ having a spatial temperature resolution of at least one experimental position $P_{exp}$ corresponding to the at least one position $P_i$ at the internal wall 281 of the evaporation chamber 280.

Then, the at least one interpretation of the internal temperature $T_i$ for the at least one position $P_i$ at the internal wall 281 of the evaporation chamber 280 is correlated to the at least one corresponding experimental temperature $T_{exp\_i}$ of the experimental temperature profile $T_{exp\_prof}$ for at least one corresponding experimental position $P_{exp\_i}$, respectively. Thus, the at least one interpretation of the internal temperature $T_i$ related to the at least one position $P_i$ at the internal wall 281 is, according to the model, defined as corresponding to the at least one experimental internal temperature $T_{exp\_i}$ related to the least one corresponding experimental position $P_{exp\_i}$, respectively.

As a non-limiting example, the temperature model is determined by injecting, by use of a dosage device 271, differing dosages of the additive into a prototype/physical model of the evaporation chamber 280. The prototype/physical model may here at least in size and geometry correspond to an actual evaporation chamber 280 being included in the exhaust treatment system, and may possibly also gave an experimental mass flow corresponding to the exhaust mass flow $\overset{.}{M}_{exh}$ flowing through the prototype/physical model. The prototype/physical model has at least one experimental position $P_{exp\_i}$ defined as corresponding to the at least one position $P_i$ at the evaporation chamber inner wall 281. Along the internal wall of the prototype/physical model, at least one experimental internal temperature $T_{exp\_i}$ related to the at least one experimental position $P_{exp\_i}$ is measured. Thus, at one or more experimental prototype/physical model positions $P_{exp\_i}$, corresponding to the one or more positions $P_i$ of the evaporation chamber 280 (shown in figure 3), the at least one experimental internal temperature $T_{exp\_i}$ resulting from the actual injection of the additive is measured, respectively. Hereby, the experimental temperature profile $T_{exp\_prof}$ for at least one corresponding experimental position $P_{exp\_i}$ is determined. The experimental temperature profile $T_{exp\_prof}$ thus has a spatial temperature resolution with a resolution corresponding to the number of at least one corresponding experimental position $P_{exp\_i}$. Then, the at least one interpretation of the internal temperature $T_i$ related to the at least one corresponding position $P_i$ at the internal wall 281 is, according to the model, defined as corresponding to the at least one experimental internal temperature $T_{exp\_i}$ related to the least one corresponding experimental position $P_{exp\_i}$, respectively. Thus, the experimental temperature profile $T_{exp\_prof}$ may be determined by injecting differing amounts of additive with the experimental dosage device, and by measuring the resulting one or more experimental internal temperatures $T_{exp\_i}$ related to the one or more corresponding experimental positions $P_{exp\_i}$ along the internal wall 281, for differing operation points of the engine 201.

According to an embodiment of the present invention, at least one experimental cold position $P_{exp\_cold}$ is identified along the internal wall of the prototype/physical model based on the experimental temperature profile $T_{exp\_prof}$. At least one cold position $P_{i\_cold}$ at the internal wall 281 of the evaporation chamber 280, which corresponds to the at least one experimental cold position $P_{exp\_cold}$, may then be identified. Thus, based on the experimental temperature profile $T_{exp\_prof}$, it is determined where along the internal wall 281 the additive ends up at the wall, which may be used as an indicator of where along the internal wall 281 there is a potential risk for critical condition to occur. The hereby identified at least one cold position $P_{i\_cold}$ is determined as being at least one position related to which, i.e. in and/or downstream of which, the risk for the at least one critical condition

$C_{i\_critical}$ may be increased. Often, the deposits/residues are formed/created downstream adjacent to the at least one cold position $P_{i\_cold}$, where the temperature is slightly higher than in the at least one cold position $P_{i\_cold}$. Thus, by analyzing the experimental temperature profile $T_{exp\_prof}$, at least one experimental position $P_{exp\_cold}$ which is often colder than other positions along the internal wall of the prototype/physical model may be detected/found. Of course, it may be extra interesting and/or efficient to analyse areas around such identified one or more extra cold positions $P_{i\_cold}$ when the risk for a critical condition $C_{i\_critical}$ is determined, since it is likely that such a critical condition $C_{i\_critical}$ may occur adjacent to such cold positions $P_{i\_cold}$, and more precisely in and/or adjacent/directly downstream of such a one or more extra cold positions $P_{i\_cold}$.

This at least one experimental cold position $P_{exp\_cold}$ has at least one corresponding cold position $P_{i\_cold}$ in the evaporation chamber 280.

According to an embodiment of the present invention, the experimental temperature profile $T_{exp\_prof}$ and/or one or more experimental internal temperatures $T_{exp\_i}$ for the one or more corresponding experimental positions $P_{exp\_i}$ along the internal wall 281 are at least partly predicted/calculated.

As mentioned above, the at least one time dependent condition $C_i$ is determined 410 based on at least one interpretation of the internal temperature $T_i$ related to the at least one internal wall position $P_i$, respectively, an exhaust stream mass flow $\dot{M}_{exh}$, and/or an additive injection mass flow $\dot{M}_{add}$. The at least one interpretation of the internal temperature $T_i$ may, according to an embodiment of the present invention, be determined based also on at least one measurement of the at least one internal temperature $T_i$ performed by at least one internal temperature sensor 265 (shown in figure 3) arranged at the at least one position $P_i$ at the internal wall 281 of the evaporation chamber 280. Hereby, a very reliable value for the at least one internal temperature $T_i$ is provided. According to an embodiment, the at least one internal temperature sensor 265 is embedded in the internal wall 281, i.e. is embedded within the material/castings of the internal wall 281.

As mentioned above, the representation of the internal temperature $T_i$ may be seen as a virtual temperature composed by a combination of the actual evaporation chamber wall temperature $T_{i\_wall}$ and the exhaust temperature $T_{exh}$; $T_i = x*T_{i\_wall} + y*T_{exh}$; or as the actual temperature $T_{i\_wall}$ on the internal wall of the evaporation chamber for the least one position $P_i$; $T_i = T_{i\_wall}$.

In some implementations, the evaporation chamber may be at least partly heated by use of a heating device. The heating device is then arranged for increasing the temperature of one or more sections of the evaporation chamber. According to an embodiment of the present invention, for such implementations, the herein described representation of the internal temperature $T_i$ and/or the herein determination of the representation of the internal temperature $T_i$ is then influenced by this heating of the evaporation chamber. For example, the herein described at least one temperature model may then be based also on the provided heat/increase temperature, i.e. the at least one temperature model may take added heat into consideration.

As mentioned above, the at least one time dependent condition $C_i$ is determined 410 based, among other input, on at least the exhaust stream mass flow $\dot{M}_{exh}$. This exhaust stream mass flow $\dot{M}_{exh}$ may be determined in a number of ways. For example, the exhaust stream mass flow $\dot{M}_{exh}$ may be determined based on at least one mass flow model for the exhaust treatment system 250. This model may take into account e.g. the physical form and dimension of the exhaust treatment system and/or an operation mode for the engine 201 producing the exhaust stream 203.

The exhaust stream mass flow $\dot{M}_{exh}$ may also be determined based an amount of fuel and an amount of air being input into the cylinders of the engine 201 producing the exhaust stream 203. Thus, based on the air and fuel being input into the cylinders, a resulting exhaust stream mass flow $\dot{M}_{exh}$ may be calculated, which may be used when determining the at least one time dependent condition $C_i$.

The exhaust stream mass flow $\dot{M}_{exh}$ may also be determined based on at least one measurement of the exhaust mass flow $\dot{M}_{exh}$ for the exhaust stream 203. This measurement may e.g. be performed by at least one mass flow sensor 263 arranged upstream the evaporation chamber 280 in the exhaust treatment system 250.

According to an embodiment of the present invention, the at least one time dependent condition $C_i$ is related to a mass $M_{add\_wall}$ of additive being present at the at least one position $P_i$ at the internal wall 281 of the evaporation chamber 280. As mentioned above, if for example the amount of injected additive is large and/or if the at least one interpretation of the internal temperature $T_i$ is low, a mass $M_{add\_wall}$ of additive gathering, i.e. a concentration of additive, at the internal wall could easily form an additive residue. Therefore, a mass $M_{add\_wall}$ of additive being present at the at least one position $P_i$ at the internal wall 281 could under certain conditions be interpreted as being a risk for at least one critical condition $C_{i\_critical}$, i.e. for additive residues, related to the at least one position $P_i$.

The mass $M_{add\_wall}$ of additive present at the internal wall 281 may be determined/estimated based on the at least one interpretation of the internal temperature $T_i$, the injected additive mass flow $\dot{M}_{add}$, the exhaust mass flow $\dot{M}_{exh}$ and/or an injection time period $t_{add}$. Thus, the amount of additive being injected and/or the at least one interpretation of the internal temperature $T_i$ may be used for determining the mass $M_{add\_wall}$ of additive present at the internal wall 281. The forming of mass $Ma_{dd\_wall}$ of additive present at the internal wall 281 may further be determined/defined based on numerical and/or physical experiments for the evaporation chamber, corresponding to the ones mentioned above for the temperature model.

According to an embodiment of the present invention, the determination 420 of the risk for at least one critical condition $C_{i\_critical}$ occurring related to the at least one position $P_i$ is determined based also on an exhaust temperature $T_{exh}$ for the exhaust stream 203 upstream the evaporation chamber 280, e.g. measured by an upstream temperature sensor 263 in the exhaust treatment system 250. This is due to the fact that different exhaust temperature $T_{exh}$ result in different evaporation rates and therefore also in different masses $M_{add\_wall}$ of additive being present at the internal wall 281 for the same amounts of additive being injected into the exhaust stream 203. For higher exhaust temperatures $T_{exh}$, the risk for forming residues is lower than for lower exhaust temperatures $T_{exh}$, i.e. the risk for ending up in at least one critical condition $C_{i\_critical}$ is lower. This also means that more additive may be injected into the exhaust stream 203 if the exhaust temperature $T_{exh}$ is higher, without risk for reaching at least one critical condition $C_{i\_critical}$, than for lower exhaust temperatures $T_{exh}$. According to an embodiment of the present invention, the determination 420 of the risk for at least one critical condition $C_{i\_critical}$ occurring related to the at least one position $P_i$ may be determined based also on the exhaust mass flow $\dot{M}_{exh}$ for the exhaust stream.

According to an embodiment of the present invention, the at least one time dependent condition $C_i$ is determined at least partly based on one or more simulations of future/upcoming engine conditions for a road section ahead of the vehicle. Thus, the simulations may conducted such that they are based on the current position and situation of the vehicle and looks forward over the road section, wherein the simulations may be made on the basis of e.g. a road slope for the road section. The road section can also be seen as a horizon ahead of the vehicle, for which the simulation is to be conducted. The simulation may also be based on one or more of e.g. a transmission mode, a driving method, a current actual vehicle speed, at least one engine characteristic, such as maximum and/or minimum engine torque, a vehicle weight, an air resistance, a rolling resistance, a gear ratio in the gearbox and/or the drive train, a wheel radius. The road section information, on which the simulations may be based, may be obtained in a number of different ways. The information regarding the upcoming road section, e. g. the road slope, may be determined on the basis of map data, for example from digital maps comprising topographical information, in combination with positioning information, such as, for example GPS information (Global Positioning System). With the aid of the positioning information, the position of the vehicle in relation to the map data can be established, so that e.g. the road slope can be extracted from the map data.

In many present-day cruise control and/or navigation systems, map data and positioning information are utilized. Such systems can then provide map data and positioning information to the system for the present invention, the effect of which is that the added complexity for the determination of the road section information is minimized.

The information of the upcoming road section, e.g. the road slope, on which the simulations are based can also be obtained by estimating e.g. the road slope encountered by the vehicle in the simulation instance. There are many ways of estimating this road slope, for example on the basis of an engine torque in the vehicle, of an acceleration for the vehicle, on an accelerometer, on GPS information, on radar information, on camera information, on information from another vehicle, on positioning information and road slope information stored earlier in the vehicle, or on information obtained from a traffic system related to said road section. In systems in which information exchange between vehicles is utilized, road section information estimated by one vehicle can also be made available to other vehicles, either directly, or via an intermediate unit such as a database or the like.

A person skilled in the art will realise that a method for controlling a dosage device and/or an engine according to the present invention may also be implemented in a computer program, which when executed in a computer will cause the computer to execute the method. The computer program usually forms a part of a computer program product 503, wherein the computer program product comprises a suitable digital nonvolatile/permanent/persistent/durable storage medium on which the computer program is stored. The nonvolatile/permanent/persistent/durable computer readable medium includes a suitable memory, e.g.: ROM (Read-Only Memory), PROM (Programmable Read-Only Memory), EPROM (Erasable PROM), Flash, EEPROM (Electrically Erasable PROM), a hard disk device, etc.

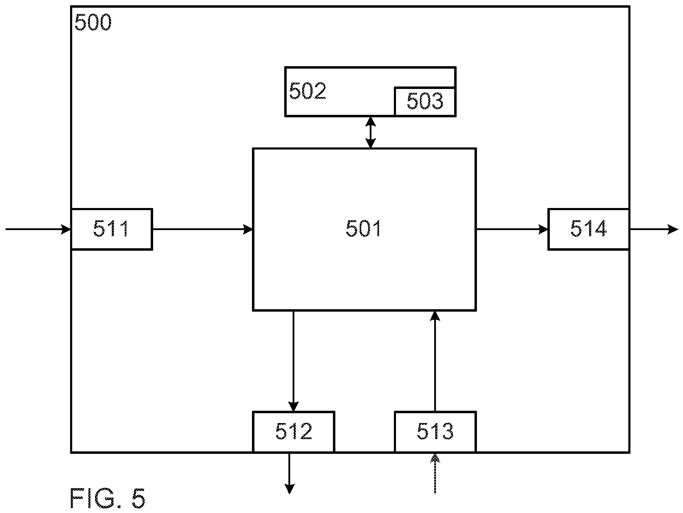

Figure 5 schematically shows a control device/means 500. The control device/means 500 comprises a calculation unit 501, which may include essentially a suitable type of processor or microcomputer, e.g. a circuit for digital signal processing (Digital Signal Processor, DSP), or a circuit with a predetermined specific function (Application Specific Integrated Circuit, ASIC).

The calculation unit 501 is connected to a memory unit 502, installed in the control device/means 500, providing the calculation device 501 with e.g. the stored program code and/or the stored data, which the calculation device 501 needs in order to be able to carry out calculations. The calculation unit 501 is also set up to store interim or final results of calculations in the memory unit 502.

Further, the control device/means 500 is equipped with devices 511, 512, 513, 514 for receiving and sending of input and output signals, respectively. These input and output signals may contain wave shapes, pulses, or other attributes, which may be detected as information by the devices 511, 513 for the receipt of input signals, and may be converted into signals that may be processed by the calculation unit 501. These signals are then provided to the calculation unit 501. The devices 512, 514 for sending output signals are arranged to convert the calculation result from the calculation unit 501 into output signals for transfer to other parts of the vehicle's control system, and/or the component(s) for which the signals are intended.

Each one of the connections to the devices for receiving and sending of input and output signals may include one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation unit 501, and that the above-mentioned memory may consist of the memory unit 502.

Generally, control systems in modern vehicles include of a communications bus system, comprising one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than what is shown in figures 1, 2, 3 and 5, which is well known to a person skilled in the art within the technology area.

As a person skilled in the art will realise, the control device/means 500 in figure 5 may comprise and/or illustrate one or several of the control devices/systems/means 215 and 260 in figure 1, the control devices/systems/means 215, 260, 290 in figure 2, or the control devices/systems/means 215, 260, 290 in figure 3. The control device/means 290 in figures 2 and 3 is arranged for performing the present invention. The units/means 291, 292, 293 may for example correspond to groups of instructions, which can be in the form of programming code, that are input into, and are utilized by a processor when the units are active and/or are utilized for performing its method step, respectively.

The present invention, in the embodiment shown, may be implemented in the control device/menas 500. The invention may, however, also be implemented wholly or partly in one or several other control devices, already existing in the vehicle, or in a control device dedicated to the present invention.

According to an aspect of the present invention, a system 200 arranged for controlling at least one of a dosage device 271 and an engine 201 is disclosed. As described above, the exhaust stream 203 is produced by an engine 201, and is then treated by an exhaust treatment system 250 including e.g. a reduction catalyst device. At least one additive is injected into the exhaust stream 203 by the dosage device 271, and is evaporated in an evaporation chamber 280 when being injected into the exhaust stream 203.

The system 200 includes a first determination unit 291, which is arranged for determining 410 at least one time dependent condition $C_i$ of at least one position $P_i$ at an internal wall 281 of the evaporation chamber 280. As is described above, the determination unit 291 is arranged for determining the at least one time dependent condition $C_i$ at least based on at least one interpretation of the internal temperature $T_i$ related to the at least one position $P_i$, respectively, the at least one representation of the internal temperature $T_i$ being determined based on at least one temperature model for the evaporation chamber 280 and one or more of at least one measurement and at least one prediction of an exhaust temperature $T_{exh}$ for the exhaust stream 203 upstream the evaporation chamber 280 in the exhaust treatment system 250.

According to an embodiment of the present invention, the at least one time dependent condition $C_i$ is determined based also on one or more of an exhaust mass flow $\dot{M}_{exh}$ of the exhaust stream 203, and an additive mass flow $\dot{M}_{add}$ being injected by the dosage device 271 into the exhaust stream 203.

The determination unit 291 may be arranged for performing any above described embodiment related to the determination of at least one time dependent condition $C_i$.

The system 200 also includes a second determination unit 292, which is arranged for determining 420 a risk for at least one critical condition $C_{i\_critical}$ occurring related to the at least one position $P_i$ based on the least one time dependent condition $C_i$ determined by the first determination unit 291, such that the risk for at least one critical condition $C_{i\_critical}$ has a spatial resolution along the internal wall of the evaporation chamber 280. The second determination unit 292 may be arranged for performing any above described embodiment related to the determination of the risk for at least one critical condition $C_{i\_critical}$ of occur.

The system 200 further includes a control unit 293, which is arranged for controlling 430 at least one of the dosage device 271 and the engine 201 based on the risk for at least one critical condition $C_{i\_critical}$ being determined by the second determination unit 292. The control unit 293 may be arranged for performing any above mentioned control of the dosage device 271 and/or of the engine 201.

The system 200 may thus be arranged/modified for performing any of the in this document described embodiments of the method according to the present invention.

The exhaust treatment system 250 shown in figures 2 and 3 includes only one dosage device 271, only one reduction catalyst device 230, and only one evaporation chamber 280 for pedagogic reasons. It should, however, be noted that the present invention is not restricted to such systems, and may instead be generally applicable in any exhaust treatment system including one or more dosage devices, one or more reduction catalyst devices, and one or more evaporation chambers. For example, the present invention is especially applicable on systems including a first dosage device, a first evaporation chamber, a first reduction catalyst device, a second dosage device, a second evaporation chamber and a second reduction catalyst device. Each one of the first and second reduction catalyst devices may include at least one SCR-catalyst, at least one ammonia slip catalyst ASC, and/or at least one multifunctional slip-catalyst SC. The multifunctional slip catalyst SC may be arranged primarily for reduction of nitrogen oxides $NO_x$, and secondarily for oxidation of additive in the exhaust stream. The multifunctional slip catalyst SC may also be arranged for performing at least some of the functions normally performed by a DOC, e.g. oxidation of hydrocarbons $C_xH_y$ (also referred to as HC) and carbon monoxide CO in the exhaust stream 203 into carbon dioxide $CO_2$ and water $H_2O$ and/or oxidation of nitrogen monoxides NO occurring in the exhaust stream into nitrogen dioxide $NO_2$.

The present invention is also related to a vehicle 100, such as e.g. a truck, a bus or a car, including the herein described system 200 for arranged for controlling a dosage device 271 and/or an engine 201.

The inventive method, and embodiments thereof, as described above, may at least in part be performed with/using/by at least one device. The inventive method, and embodiments thereof, as described above, may be performed at least in part with/using/by at least one device that is suitable and/or adapted for performing at least parts of the inventive method and/or embodiments thereof. A device that is suitable and/or adapted for performing at least parts of the inventive method and/or embodiments thereof may be one, or several, of a control unit, an electronic control unit (ECU), an electronic circuit, a computer, a computing unit and/or a processing unit.

With reference to the above, the inventive method, and embodiments thereof, as described above, may be referred to as an, at least in part, computerised method. Said method being, at least in part, computerised meaning that it is performed at least in part with/using/by said at least one device that is suitable and/or adapted for performing at least parts of the inventive method and/or embodiments thereof.

With reference to the above, the inventive method, and embodiments thereof, as described above, may be referred to as an, at least in part, automated method. Said method being, at least in part, automated meaning that it is performed with/using/by said at least one device that is suitable and/or adapted for performing at least parts of the inventive method and/or embodiments thereof.

The present invention is not limited to the embodiments of the invention described above, but relates to and comprises all embodiments within the scope of the enclosed independent claims.

**Claims**

1. Method (400) for controlling a dosage device (271) and/or an engine (201), said engine (201) producing an exhaust stream (203) being treated by an exhaust treatment system (250) by use of an additive being injected into said exhaust stream (203) by said dosage device (271), wherein said additive is intended to be evaporated in an evaporation chamber (280) when being injected into said exhaust stream (203); the method comprising:

   - determining (410) a time dependent condition $C_i$ of a position $P_i$ at an internal wall (281) of said evaporation chamber (280),

      said time dependent condition $C_i$ being determined based on a representation of an internal temperature $T_i$ related to said position $P_i$,
      said representation of said internal temperature $T_i$ being determined based on a temperature model for said evaporation chamber (280) and:

         a measurement of an exhaust temperature $T_{exh}$ for said exhaust stream (203) upstream said evaporation chamber (280) in said exhaust treatment system (250), and/or
         a prediction of an exhaust temperature $T_{exh}$ for said exhaust stream (203) upstream said evaporation chamber (280) in said exhaust treatment system (250);

   - determining (420) a risk for a critical condition $C_{i\_critical}$ related to said position $P_i$ based on said determined time dependent condition $C_i$ such that said risk for the critical condition $C_{i\_critical}$ has a spatial resolution along said internal wall of said evaporation chamber (280); and
   - controlling (430) said dosage device (271) and/or said engine (201) based on said determined risk for the critical condition $C_{i\_critical}$.

2. The method (400) as claimed in claim 1, wherein said representation of the internal temperature $T_i$ is determined based also on a measurement of said internal temperature performed by an internal temperature sensor (265) arranged at said position $P_i$ at said internal wall (281) of said evaporation chamber (280) as a combination of said exhaust temperature $T_{exh}$ for said exhaust stream (203) and an internal wall temperature $T_{i\_wall}$; $T_i = x * T_{i\_wall} + y * T_{exh}$ .

3. The method (400) as claimed in claim 2, wherein said temperature model utilizes said exhaust temperature $T_{exh}$ for said exhaust stream (203), an exhaust mass flow $\dot{M}_{exh}$ , and an additive mass flow $\dot{M}_{add}$ being injected into said exhaust stream (203) as input parameters.

4. The method (400) as claimed in any one of claims 2-3, wherein

   - said temperature model is determined by numerical and/or physical experiments resulting in an experimental temperature profile $T_{exp\_prof}$ having a spatial temperature resolution of an experimental position $P_{exp}$ corresponding to said position $P_i$ of said evaporation chamber (280), respectively; and
   - said representation of the internal temperature $T_i$ for said position $P_i$ of said evaporation chamber (280) corresponds to an experimental temperature $T_{exp\_i}$ of said experimental temperature profile $T_{exp\_prof}$ for a corresponding experimental position $P_{exp\_i}$, respectively.

5. The method (400) as claimed in claim 4, wherein

   - an experimental cold position $P_{exp\_cold}$ of said experimental temperature profile $T_{exp\_prof}$ is identified based on said experimental temperature profile $T_{exp\_prof}$; and
   - a cold position $P_{i\_cold}$ at said internal wall (281) of said evaporation chamber (280) is determined as being a position related to an increased risk for said critical condition $C_{i\_critical}$, said cold position $P_{i\_cold}$ being determined as corresponding to said experimental cold position $P_{exp\_cold}$.

6. The method (400) as claimed in any one of claims 1-5, wherein said time dependent condition $C_i$ is determined based also on one or more of an exhaust

mass flow $\dot{M}_{exh}$ of said exhaust stream (203), and an additive mass flow $\dot{M}_{add}$ being injected by said dosage device (271) into said exhaust stream (203) .

7. The method (400) as claimed in claim 6, wherein said exhaust mass flow $\dot{M}_{exh}$ is determined based on at least one in the group of:

   - a mass flow model for said exhaust treatment system (250);
   - an amount of fuel and an amount of air being input into cylinders of said engine (201); and
   - a measurement of said exhaust mass flow $\dot{M}_{exh}$ for said exhaust stream (203) performed by a mass flow sensor (263) arranged upstream said evaporation chamber (280) in said exhaust treatment system (250).

8. The method (400) according to any one of claims 1-7, wherein said at least one time dependent condition $C_i$ is related to a mass $M_{add\_wall}$ of said additive being present at said at least one position $P_i$ at said internal wall (281) of said evaporation chamber (280).

9. The method (400) as claimed in claim 8, wherein said mass $M_{add\_wall}$ of said additive is determined based on one or more of said representation of the internal temperature $T_i$, said additive mass flow $\dot{M}_{add}$ being injected into said exhaust stream (203), said exhaust mass flow $\dot{M}_{exh}$ for said exhaust stream (203), and a time period $t_{add}$ during which said additive is injected into said exhaust stream (203).

10. The method (400) as claimed in any one of claims 1-9, wherein the control (430) of said dosage device (271) includes control of one or more in the group of:

    - an additive mass flow $\dot{M}_{add}$ being injected into said exhaust stream (203); and
    - a time period $t_{add}$ during which said additive is injected into said exhaust stream (203).

11. The method (400) as claimed in any one of claims 1-10, wherein the control (430) of said engine (201) includes control of one or more in the group of:

    - control of an injection strategy for said engine (201);
    - control of a timing for an injection of fuel into cylinders of said engine (201);

- control of an injection pressure for an injection of fuel into cylinders of said engine (201);
- control of an injection phasing for an injection of fuel into cylinders of said engine (201); and
- control of a device for exhaust recirculation (EGR; 211).

**12.** A computer program comprising instructions which, when the program is executed by a computer, cause the computer to carry out the method according to any one of claims 1-11.

**13.** A computer-readable medium comprising instructions which, when the program of claim 12 is executed by a computer, cause the computer to carry out the method according to any one of claims 1-11.

**14.** System (200) arranged for controlling a dosage device (271) and/or an engine (201), said engine (201) producing an exhaust stream (203) being treated by an exhaust treatment system (250) by use of an additive being injected into said exhaust stream (203) by said dosage device (271), wherein said additive is intended to be evaporated in an evaporation chamber (280) when being injected into said exhaust stream (203); the system comprising:

- means (291), arranged for determining (410) a time dependent condition $C_i$ of a position $P_i$ at an internal wall (281) of said evaporation chamber (280),

said means (291) being arranged for determining said time dependent condition $C_i$ based on a representation of an internal temperature $T_i$ related to said position $P_i$, said representation of said internal temperature $T_i$ being determined based on a temperature model for said evaporation chamber (280) and:

a measurement of an exhaust temperature $T_{exh}$ for said exhaust stream (203) upstream said evaporation chamber (280) in said exhaust treatment system (250), and/or a prediction of an exhaust temperature $T_{exh}$ for said exhaust stream (203) upstream said evaporation chamber (280) in said exhaust treatment system (250);

- means (292), arranged for determining (420) a risk for a critical condition $C_{i\_critical}$ related to said position $P_i$ based on said determined time dependent condition $C_i$ such that said risk for the critical condition $C_{i\_critical}$ has a spatial resolution along said internal wall of said evaporation chamber (280); and
- means (293), arranged for controlling (430) said dosage device (271) and/or said engine (201) based on said determined risk for the critical condition $C_{i\_critical}$; a control unit (290) including said means (291,292,293)

**Patentansprüche**

**1.** Verfahren (400) zum Steuern einer Dosiervorrichtung (271) und/oder eines Motors (201), wobei der Motor (201) einen Abgasstrom (203) erzeugt, der durch ein Abgasbehandlungssystem (250) unter Verwendung eines von der Dosiervorrichtung (271) in den Abgasstrom (203) eingespritzten Additivs behandelt wird, wobei das Additiv dazu bestimmt ist, in einer Verdampfungskammer (280) verdampft zu werden, wenn es in den Abgasstrom (203) eingespritzt wird, wobei das Verfahren umfasst:

- Bestimmen (410) eines zeitabhängigen Zustands $C_i$ einer Position $P_i$ an einer Innenwand (281) der Verdampfungskammer (280),

wobei der zeitabhängige Zustand $C_i$ auf der Grundlage einer Darstellung einer Innentemperatur $T_i$ in Bezug auf die Position $P_i$ bestimmt wird, wobei die Darstellung der Innentemperatur $T_i$ auf der Grundlage eines Temperaturmodells für die Verdampfungskammer (280) bestimmt wird und:

einer Messung einer Abgastemperatur $T_{exh}$ für den Abgasstrom (203) stromaufwärts der Verdampfungskammer (280) in dem Abgasbehandlungssystem (250) und/oder einer Vorhersage einer Abgastemperatur $T_{exh}$ für den Abgasstrom (203) stromaufwärts der Verdampfungskammer (280) in dem Abgasbehandlungssystem (250);

- Bestimmen (420) eines Risikos eines kritischen Zustands $C_{i\_citical}$ in Bezug auf die Position $P_i$ auf der Grundlage des bestimmten zeitabhängigen Zustands $C_i$, sodass das Risiko eines kritischen Zustands $C_{i\_citical}$ eine räumliche Auflösung entlang der Innenwand der Verdampfungskammer (280) aufweist, und
- Steuern (430) der Dosiervorrichtung (271) und/oder des Motors (201) auf der Grundlage des bestimmten Risikos eines kritischen Zustand $C_{i\_critical}$.

**2.** Verfahren (400) nach Anspruch 1, wobei die Dar-

stellung der Innentemperatur $T_i$ auch auf der Grundlage einer Messung der Innentemperatur, die von einem an der Position $P_i$ an der Innenwand (281) der Verdampfungskammer (280) angeordneten Innentemperatursensor (265) durchgeführt wird, als eine Kombination aus der Abgastemperatur $T_{exh}$ für den Abgasstrom (203) und einer Innenwandtemperatur $T_{i\_wall}$ bestimmt wird; $T_i = x * T_{i\_wall} + y * T_{exh}$.

3. Verfahren (400) nach Anspruch 2, wobei das Temperaturmodell die Abgastemperatur $T_{exh}$ für den Abgasstrom (203), einen Abgasmassenstrom $M_{exh}$ und einen in den Abgasstrom (203) eingespritzten Additivmassenstrom $M_{add}$ als Eingangsparameter verwendet.

4. Verfahren (400) nach einem der Ansprüche 2 bis 3, wobei

   - das Temperaturmodell durch numerische und/oder physikalische Experimente bestimmt wird, die jeweils zu einem experimentellen Temperaturprofil $T_{exp\_prof}$ führen mit einer räumlichen Temperaturauflösung einer experimentellen Position $P_{exp}$, die der Position $P_i$ der Verdampfungskammer (280) entspricht; und
   - die Darstellung der Innentemperatur $T_i$ für die Position $P_i$ der Verdampfungskammer (280) einer experimentellen Temperatur $T_{exp\_i}$ des experimentellen Temperaturprofils $T_{exp\_prof}$ für eine entsprechende experimentelle Position $P_{exp\_i}$ entspricht.

5. Verfahren (400) nach Anspruch 4, wobei

   - eine experimentelle Kälteposition $P_{exp\_cold}$ des experimentellen Temperaturprofils $T_{exp\_prof}$ auf der Grundlage des experimentellen Temperaturprofils $T_{exp\_prof}$ festgestellt wird und
   - eine Kälteposition $P_{i\_cold}$ an der Innenwand (281) der Verdampfungskammer (280) als eine Position bestimmt wird, die mit einem erhöhten Risiko eines kritischen Zustands $C_{i\_critical}$ verbunden ist, wobei die Kälteposition $P_{i\_cold}$ derart bestimmt wird, dass sie der experimentellen Kälteposition $P_{exp\_cold}$ entspricht.

6. Verfahren (400) nach einem der Ansprüche 1 bis 5, wobei der zeitabhängige Zustand $C_i$ auch auf der Grundlage eines oder mehrerer der folgenden Elemente bestimmt wird: Abgasmassenstrom $M_{exh}$ des Abgasstroms (203) und von der Dosiervorrichtung (271) in den Abgasstrom (203) eingespritzter Additivmassenstrom $M_{add}$.

7. Verfahren (400) nach Anspruch 6, wobei der Abgasmassenstrom $M_{exh}$ auf der Grundlage von wenigstens einem Element der folgenden Gruppen bestimmt wird:

   - einem Massenstrommodell für das Abgasbehandlungssystem (250);
   - einer Kraftstoffmenge und einer Luftmenge, die den Zylindern des Motors (201) zugeführt werden; und
   - einer Messung des Abgasmassenstroms $M_{exh}$ für den Abgasstrom (203), die von einem Massenstromsensor (263) durchgeführt wird, der stromaufwärts der Verdampfungskammer (280) in dem Abgasbehandlungssystem (250) angeordnet ist.

8. Verfahren (400) nach einem der Ansprüche 1-7, wobei der wenigstens eine zeitabhängige Zustand $C_i$ mit einer Masse $M_{add\_wall}$ des Additivs zusammenhängt, die an der wenigstens einen Position $P_i$ an der Innenwand (281) der Verdampfungskammer (280) vorhanden ist.

9. Verfahren (400) nach Anspruch 8, wobei die Masse $M_{add\_wall}$ des Additivs auf der Grundlage eines oder mehrerer der folgenden Elemente bestimmt wird: Darstellung der Innentemperatur $T_i$, wobei der Additivmassenstrom $M_{add}$ in den Abgasstrom (203) eingespritzt wird, Abgasmassenstrom $M_{exh}$ für den Abgasstrom (203) und Zeitdauer $t_{add}$, während der das Additiv in den Abgasstrom (203) eingespritzt wird.

10. Verfahren (400) nach einem der Ansprüche 1 bis 9, wobei die Steuerung (430) der Dosiervorrichtung (271) die Steuerung eines oder mehrerer Elemente der folgenden Gruppen umfasst:

    - eines Additivmassenstroms $M_{add}$, der in den Abgasstrom (203) eingespritzt wird; und
    - einer Zeitdauer $t_{add}$, während der das Additiv in den Abgasstrom (203) eingespritzt wird.

11. Verfahren (400) nach einem der Ansprüche 1 bis 10, wobei die Steuerung (430) des Motors (201) die Steuerung eines oder mehrerer Elemente der folgenden Gruppen umfasst:

    - Steuerung einer Einspritzstrategie für den Motor (201);
    - Steuerung eines Zeitpunkts für eine Kraftstoffeinspritzung in die Zylinder des Motors (201);
    - Steuerung eines Einspritzdrucks für eine Kraftstoffeinspritzung in die Zylinder des Motors (201);
    - Steuerung einer Einspritzphaseneinstellung für eine Kraftstoffeinspritzung in die Zylinder des Motors (201); und
    - Steuerung einer Abgasrückführungsvorrichtung (AGR; 211).

**12.** Computerprogramm mit Befehlen, die, wenn das Programm von einem Computer ausgeführt wird, den Computer veranlassen, das Verfahren nach einem der Ansprüche 1-11 auszuführen.

**13.** Computerlesbares Medium mit Befehlen, die, wenn das Programm nach Anspruch 12 von einem Computer ausgeführt wird, den Computer veranlassen, das Verfahren nach einem der Ansprüche 1-11 auszuführen.

**14.** System (200) zum Steuern einer Dosiervorrichtung (271) und/oder eines Motors (201), wobei der Motor (201) einen Abgasstrom (203) erzeugt, der durch ein Abgasbehandlungssystem (250) unter Verwendung eines von der Dosiervorrichtung (271) in den Abgasstrom (203) eingespritzten Additivs behandelt wird, wobei das Additiv dazu bestimmt ist, in einer Verdampfungskammer (280) verdampft zu werden, wenn es in den Abgasstrom (203) eingespritzt wird, wobei das System umfasst:

- Einrichtung (291) zum Bestimmen (410) eines zeitabhängigen Zustands $C_i$ einer Position $P_i$ an einer Innenwand (281) der Verdampfungskammer (280),

wobei die Einrichtung (291) angeordnet ist zum Bestimmen des zeitabhängigen Zustands $C_i$ auf der Grundlage einer Darstellung einer Innentemperatur $T_i$ in Bezug auf die Position $P_i$,
wobei die Darstellung der Innentemperatur $T_i$ auf der Grundlage eines Temperaturmodells für die Verdampfungskammer (280) bestimmt wird und:

einer Messung einer Abgastemperatur $T_{exh}$ für den Abgasstrom (203) stromaufwärts der Verdampfungskammer (280) in dem Abgasbehandlungssystem (250) und/oder
einer Vorhersage einer Abgastemperatur $T_{exh}$ für den Abgasstrom (203) stromaufwärts der Verdampfungskammer (280) in dem Abgasbehandlungssystem (250);

- Einrichtung (292) zum Bestimmen (420) eines Risikos eines kritischen Zustands $C_{i\_critical}$ in Bezug auf die Position $P_i$ auf der Grundlage des bestimmten zeitabhängigen Zustands $C_i$, sodass das Risiko eines kritischen Zustands $C_{i\_citical}$ eine räumliche Auflösung entlang der Innenwand der Verdampfungskammer (280) aufweist; und
- Einrichtung (293) zum Steuern (430) der Dosiervorrichtung (271) und/oder des Motors (201) auf der Grundlage des bestimmten Risikos eines kritischen Zustand $C_{i\_critical}$;
Steuereinheit (290), die die Einrichtungen (291, 292, 293) umfasst.

**Revendications**

**1.** Procédé (400) de commande d'un dispositif de dosage (271) et/ou d'un moteur (201), ledit moteur (201) produisant un flux d'échappement (203) traité par un système de traitement d'échappement (250) en utilisant un additif injecté dans ledit flux d'échappement (203) par ledit dispositif de dosage (271), dans lequel ledit additif est destiné à être évaporé dans une chambre d'évaporation (280) lors de l'injection dans ledit flux d'échappement (203) ; le procédé comprenant :

- la détermination (410) d'une condition dépendante du temps **Ci** d'une position $P_i$ au niveau d'une paroi interne (281) de ladite chambre d'évaporation (280),

ladite condition dépendante du temps **Ci** étant déterminée sur la base d'une représentation d'une température interne **Ti** liée à ladite position $P_i$,
ladite représentation de ladite température interne $T_i$ étant déterminée sur la base d'un modèle de température pour ladite chambre d'évaporation (280) et :

une mesure d'une température d'échappement $T_{exh}$ pour ledit flux d'échappement (203) en amont de ladite chambre d'évaporation (280) dans ledit système de traitement d'échappement (250), et/ou
une prédiction d'une température d'échappement $T_{exh}$ pour ledit flux d'échappement (203) en amont de ladite chambre d'évaporation (280) dans ledit système de traitement d'échappement (250) ;

- la détermination (420) d'un risque pour une condition critique $C_{i\_critical}$ liée à ladite position Pi sur la base de ladite condition dépendante du temps déterminée **Ci** de telle sorte que ledit risque pour la condition critique $C_{i\_critical}$ a une résolution spatiale le long de ladite paroi interne de ladite chambre d'évaporation (280) ; et
- la commande (430) dudit dispositif de dosage (271) et/ou dudit moteur (201) sur la base dudit risque déterminé pour la condition critique $C_{i\_critical}$.

**2.** Procédé (400) selon la revendication 1, dans lequel ladite représentation de la température interne $T_i$ est déterminée également sur la base d'une mesure de ladite température interne réalisée par un capteur de température interne (265) agencé au niveau de ladite position $P_i$ au niveau de ladite paroi interne (281) de ladite chambre d'évaporation (280) en tant que combinaison de ladite température d'échappement $T_{exh}$ pour ledit courant d'échappement (203) et d'une température de paroi interne $T_{i\_wall}$ ; $T_i = X * T_{i\_wall} + y * T_{exh}$.

**3.** Procédé (400) selon la revendication 2, dans lequel ledit modèle de température utilise ladite température d'échappement $T_{exh}$ pour ledit flux d'échappement (203), un débit massique d'échappement $M_{exh}$, et un débit massique d'additif $M_{add}$ injectés dans ledit flux d'échappement (203) en tant que paramètres d'entrée.

**4.** Procédé (400) selon l'une quelconque des revendications 2 à 3, dans lequel

- ledit modèle de température est déterminé par des expériences numériques et/ou physiques conduisant à un profil de température expérimental $T_{exp\_prof}$ ayant une résolution de température spatiale d'une position expérimentale $P_{exp}$ correspondant à ladite position $P_i$ de ladite chambre d'évaporation (280), respectivement ; et
- ladite représentation de la température interne $T_i$ pour ladite position $P_i$ de ladite chambre d'évaporation (280) correspond à une température expérimentale $T_{exp\_i}$ dudit profil de température expérimental $T_{exp\_prof}$ pour une position expérimentale correspondante $P_{exp\_i}$, respectivement.

**5.** Procédé (400) selon la revendication 4, dans lequel

- une position de froid expérimentale $P_{exp\_cold}$ dudit profil de température expérimental $T_{exp\_prof}$ est identifiée sur la base dudit profil de température expérimental $T_{exp\_prof}$ ; et
- une position froide $P_{i\_cold}$ au niveau de ladite paroi interne (281) de ladite chambre d'évaporation (280) est déterminée comme étant une position liée à un risque accru pour ladite condition critique $C_{i\_critcal}$, ladite position froide $P_{i\_cold}$ étant déterminée comme correspondant à ladite position froide expérimentale $P_{exp\_cold}$.

**6.** Procédé (400) selon l'une quelconque des revendications 1 à 5, dans lequel ladite condition dépendante du temps $C_i$ est déterminée également sur la base d'un ou plusieurs d'un débit massique d'échappement $M_{exh}$ dudit flux d'échappement (203), et d'un débit massique d'additif $M_{add}$ injecté par ledit dispositif de dosage (271) dans ledit flux d'échappement (203).

**7.** Procédé (400) selon la revendication 6, dans lequel ledit débit massique d'échappement $M_{exh}$ est déterminé sur la base d'au moins un dans le groupe suivant :

- un modèle de débit massique pour ledit système de traitement d'échappement (250) ;
- une quantité de carburant et une quantité d'air introduits en entrée dans les cylindres dudit moteur (201) ; et
- une mesure dudit débit massique d'échappement $M_{exh}$ pour ledit flux d'échappement (203) réalisée par un capteur de débit massique (263) agencé en amont de ladite chambre d'évaporation (280) dans ledit système de traitement d'échappement (250).

**8.** Procédé (400) selon l'une quelconque des revendications 1 à 7, dans lequel ladite au moins une condition dépendante du temps $C_i$ est liée à une masse $M_{add\_wall}$ dudit additif présent au niveau de ladite au moins une position $P_i$ au niveau de ladite paroi interne (281) de ladite chambre d'évaporation (280).

**9.** Procédé (400) selon la revendication 8, dans lequel ladite masse $M_{add\_wall}$ dudit additif est déterminée sur la base d'une ou plusieurs de ladite représentation de la température interne $T_i$, ledit débit massique d'additif $M_{add}$ étant injecté dans ledit flux d'échappement (203), ledit débit massique d'échappement $M_{exh}$ pour ledit flux d'échappement (203), et une période de temps $t_{add}$ pendant laquelle ledit additif est injecté dans ledit flux d'échappement (203).

**10.** Procédé (400) selon l'une quelconque des revendications 1 à 9, dans lequel ladite commande (430) dudit dispositif de dosage (271) inclut la commande d'un ou plusieurs dans le groupe suivant :

- un débit massique d'additif injecté dans ledit flux d'échappement (203) ; et
- une période de temps $t_{add}$ pendant laquelle ledit additif est injecté dans ledit flux d'échappement (203).

**11.** Procédé (400) selon l'une quelconque des revendications 1 à 10, dans lequel ladite commande (430) dudit moteur (201) inclut la commande d'un ou plusieurs dans le groupe suivant :

- la commande d'une stratégie d'injection pour ledit moteur (201) ;
- la commande d'une synchronisation pour une injection de carburant dans des cylindres dudit moteu (201) ;
- la commande d'une pression d'injection pour une injection de carburant dans des cylindres dudit moteur (201) ;
- la commande d'un phasage d'injection pour une injection de carburant dans des cylindres dudit moteur (201) ; et
- la commande d'un dispositif de recirculation des gaz d'échappement (EGR ; 211).

12. Programme informatique comprenant des instructions qui, lorsque le programme est exécuté par un ordinateur, amènent l'ordinateur à effectuer le procédé selon l'une quelconque des revendications 1 à 11.

13. Support lisible par ordinateur comprenant des instructions qui, lorsque le programme de la revendication 12 est exécuté par un ordinateur, amènent l'ordinateur à effectuer le procédé selon l'une quelconque des revendications 1 à 11.

14. Système (200) agencé pour commander un dispositif de dosage (271) et/ou d'un moteur (201), ledit moteur (201) produisant un flux d'échappement (203) traité par un système de traitement d'échappement (250) en utilisant un additif injecté dans ledit flux d'échappement (203) par ledit dispositif de dosage (271), dans lequel ledit additif est destiné à être évaporé dans une chambre d'évaporation (280) lors de l'injection dans ledit flux d'échappement (203) ; le système comprenant :

- un moyen (291), agencé pour déterminer (410) une condition dépendante du temps $C_i$ d'une position $P_i$ au niveau d'une paroi interne (281) de ladite chambre d'évaporation (280),

ledit moyen (291) étant agencé pour déterminer ladite condition dépendante du temps $C_i$ sur la base d'une représentation d'une température interne $T_i$ liée à ladite position $P_i$,

ladite représentation de ladite température interne $T_i$ étant déterminée sur la base d'un modèle de température pour ladite chambre d'évaporation (280) et :

une mesure d'une température d'échappement $T_{exh}$ pour ledit flux d'échappement (203) en amont de ladite chambre d'évaporation (280) dans ledit système de traitement d'échappement (250), et/ou
une prédiction d'une température d'échappement $T_{exh}$ pour ledit flux d'échappement (203) en amont de ladite chambre d'évaporation (280) dans ledit système de traitement d'échappement (250) ;

- un moyen (292), agencé pour déterminer (420) un risque pour une condition critique $C_{i\_critical}$ liée à ladite position $P_i$ sur la base de ladite condition dépendante du temps déterminée $C_i$ de telle sorte que ledit risque pour la condition critique $C_{i\_critical}$ a une résolution spatiale le long de ladite paroi interne de ladite chambre d'évaporation (280) ; et
- un moyen (293), agencé pour commander (430) ledit dispositif de dosage (271) et/ou ledit moteur (201) sur la base dudit risque déterminé pour la condition critique $C_{i\_critical}$ ; une unité de commande (290) incluant lesdits moyens (291, 292, 293).

FIG. 1

FIG. 2

FIG. 3

400

Determine $C_i$ — 410

↓

Determine risk for $C_{i\_critical}$ based on $C_i$ — 420

↓

Control dosage device and/or engine based on risk for $C_{i\_critical}$ — 430

# FIG. 4

FIG. 5

**EP 3 601 759 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013122218 A